# DEMANDE DE BREVET EUROPEEN

(11) **EP 4 559 559 A1**
(43) Date de publication de la demande: **28.05.2025**
(21) Numéro de dépôt: 24214243.8
(22) Date de dépôt: 20.11.2024
(51) Int. Cl.: B01D 53/047, B01D 53/00, B01D 53/22, F25J 3/02, C01B 32/40, C10L 1/02, C21B 7/00, F25J 1/00

(54) **PROCÉDÉ ET APPAREIL DE SÉPARATION DU GAZ RÉSIDUAIRE D'UNE UNITÉ DE PRODUCTION DE MÉTAL FERREUX**

(30) Priorité: 24.11.2023 FR 2313008
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: MARTY, Pascal, 75007 PARIS (FR); RODRIGUES, Guillaume, 75007 PARIS (FR); MADELAINE, Laurette, 75007 PARIS (FR)
(74) Mandataire: Air Liquide

(57) **Abrégé**

Dans un procédé de séparation du gaz résiduaire d'une unité de production de métal ferreux, le gaz résiduaire (1) est comprimé dans un premier compresseur (C) et ensuite séparé par adsorption à bascule de pression (4) dans une unité d'adsorption pour produire un gaz (5) appauvri en monoxyde de carbone et enrichi en CO2 par rapport au gaz résiduaire et un premier gaz (7) enrichi en monoxyde de carbone et appauvri en CO2 par rapport au gaz résiduaire, le gaz enrichi en CO2 est envoyé à une unité (CC) de séparation par condensation partielle et/ou distillation qui produit un fluide riche en CO2 (PL) contenant au moins 80% mol de CO2 et au moins une partie du premier gaz (7) enrichi en CO est séparée par perméation (M) pour former un deuxième gaz (21) enrichi en CO2 par rapport au premier gaz enrichi en CO à une première pression et un gaz (15) plus riche en CO que l'au moins une partie du premier gaz enrichi en CO.

## Description

La présente invention est relative à un procédé et à un appareil de séparation du gaz résiduaire d'une unité de production de métal ferreux.

Un procédé de fabrication de fonte dans un réacteur de fusion tel qu'un haut-fourneau est un procédé dans lequel on introduit dans celui-ci au moins du minerai de fer, un comburant et un combustible de manière à fondre le minerai et obtenir de la fonte comportant au plus 5 % de carbone, dans lequel on récupère à la sortie du réacteur des gaz (dits « de haut-fourneau ») comportant, à base sèche, de 15 à 45 % mol de CO2, de 15 à 45 % mol de CO, voire 20 à 30% mol de CO, le complément étant constitué essentiellement d'azote, d'hydrogène, de divers hydrocarbures et d'un faible pourcentage d'argon, puis on sépare le CO2 du reste du gaz de haut- fourneau, ce dernier étant envoyé vers des moyens d'utilisation dudit gaz. De préférence les gaz de haut fourneau comportent de 15 à 30 % mol de CO et/ou de CO2 chacun à base sèche. Le haut fourneau est un outil sidérurgique qui produit de la fonte à partir d'une charge de minerai de fer et de coke, l'oxydant de la combustion étant de l'air éventuellement enrichi en oxygène. Le minerai de fer est chauffé, réduit et fondu grâce au coke dont la combustion avec l'air apporte une part de l'énergie nécessaire au chauffage et à la fusion du minerai de fer.

On peut bien entendu utiliser, outre le coke, du charbon ou un autre hydrocarbure injecté au niveau des tuyères du haut-fourneau. D'autre part, du monoxyde de carbone est produit, résultant de la réaction de combustion du coke et/ou du charbon et/ou de l'hydrocarbure avec l'air appelé le vent (« blast » en anglais) qui est injecté dans lesdites tuyères, enrichi ou non en oxygène. Ce monoxyde de carbone est nécessaire à la réduction du minerai de fer. La production annuelle de fonte dans un haut-fourneau peut atteindre une centaine de milliers de tonnes pour les plus petits d'entre eux et plusieurs millions de tonnes pour les plus productifs.

Dans une même usine, on peut avoir un ou plusieurs hauts fourneaux, éventuellement jusqu'à une dizaine sur certains sites. Du fait de la combustion et des réactions engendrées dans le haut fourneau, on récupère à la sortie de celui-ci un gaz dit de haut-fourneau qui est un mélange typiquement d'azote (entre 35 et 65 percent environ en volume) qui vient essentiellement de l'air injecté aux tuyères du haut-fourneau, de monoxyde de carbone (entre environ 15 et 30 % mol) et de dioxyde de carbone (entre environ 15 et 30 % mol également) provenant de la combustion partielle ou totale du coke ou d'une manière générale du combustible injecte.

On retrouve également du fait de cette combustion de la vapeur d'eau puisque la réaction générale entre un produit carboné et l'oxygène au cours de la combustion produit essentiellement du CO2 et de l'H₂O. On retrouve également dans le gaz de haut- fourneau d'autres gaz en quantité globale inférieure, généralement inférieure au global à 12 percent en volume, ces autres gaz étant constitués notamment d'hydrogène, de divers hydrocarbures, d'argon provenant de l'air, etc.. Ce gaz de haut-fourneau est un gaz dit « pauvre » car à faible pouvoir calorifique, typiquement compris entre 2 000 et 6 000 kJ/Nm³, par opposition avec d'autres gaz sidérurgiques dits « riches » car ayant un pouvoir calorifique beaucoup plus élevé (par exemple les gaz issus d'un convertisseur de fonte en acier ou d'un four à coke, ayant des pouvoirs calorifiques typiquement compris entre 6 000 et 10 000 kJ/Nm³ et entre 12 000 et 20 000 kJ/Nm³, respectivement).

D'une manière générale, la quantité de gaz produite par un haut-fourneau est très importante et de l'ordre d'environ 1 500 Nm³ de gaz pour une tonne de fonte produite. Il en résulte que, compte tenu de la composition dudit gaz, la quantité de dioxyde de carbone produite par tonne de fonte est également très importante: par exemple pour un gaz de haut-fourneau ayant une teneur moyenne en dioxyde de carbone de 22 percent dans le gaz sec et pour un haut- fourneau produisant un million de tonnes de fonte par an, la quantité de dioxyde de carbone émise dans les gaz de haut-fourneau est de 330 millions de Nm³ par an, soit environ 650 000 tonnes de dioxyde de carbone produite pendant un an. Pour un haut fourneau qui produirait 3 millions de tonnes de fonte par an, la quantité de CO2 émise est d'environ 2 millions de tonnes par an tandis que pour un site produisant 7 millions de tonnes de fonte par an, la quantité de CO2 est d'environ 4,5 millions de tonnes.

Ces quantités sont tout-à-fait considérables et, compte tenu de l'effet négatif de ces gaz vis-à-vis de l'atmosphère et de l'environnement, il ne peut être envisagé de les envoyer ainsi directement dans l'atmosphère. En outre, rejeter lesdits gaz dans l'atmosphère consisterait à envoyer également dans celle-ci du monoxyde de carbone dont on sait qu'il est très dangereux et il est donc nécessaire de prévoir des systèmes de récupération de ce gaz de haut-fourneau.

La composition typique d'un exemple d'un gaz résiduaire d'une unité de production de métal ferreux (après refroidissement et extraction de la vapeur d'eau condensée), ici un gaz de haut fourneau ou « gaz de gueulard », est la suivante:
- H2: 4-5 mole %
- CO: 24-25 %
- CO2: 23-25 %
- N2: 40-45 %
- H2O: 3 %

Les extractions du CO2 et de l'N2 présents dans les gaz de gueulard des hauts fourneaux ont pour but de valoriser le produit riche en CO :
- comme combustible (pouvoir calorifique plus élevé) vers des turbines (génération d'électricité pour une aciérie intégrée) ou vers d'autres utilisateurs de l'aciérie (tels que les cowpers en mélange avec d'autres gaz carburants (gaz de cokerie, des hydrocarbures par exemple du gaz naturel) pour préchauffer l'air enrichi)
- comme gaz réducteur du charbon dans le haut fourneau lui-même

Il est également connu d'utiliser le gaz riche en CO issu d'un gaz de haut fourneau comme matière première pour la production de biocarburants (par exemple le procédé Steelanol ^{®} pour transformer le CO en au moins un bio-carburant, par exemple le bioéthanol.

Selon l'invention, il est prévu un procédé de séparation du gaz résiduaire d'une unité de production de métal ferreux qui est un haut fourneau dans lequel :
i) Le gaz résiduaire contient au moins du CO, du CO2, de l'hydrogène et de l'azote dont entre 15-45% mol, voire entre 15-30% mol de CO, à base sèche et est comprimé dans un premier compresseur et ensuite séparé par adsorption à bascule de pression dans une unité d'adsorption pour produire un gaz appauvri en monoxyde de carbone et enrichi en CO2 par rapport au gaz résiduaire et un premier gaz enrichi en monoxyde de carbone et appauvri en CO2 par rapport au gaz résiduaire
ii) Le gaz enrichi en CO2 est envoyé à une unité de séparation par condensation partielle et/ou distillation et/ou solidification qui produit un fluide riche en CO2 contenant au moins 80% mol de CO2
iii) Au moins une partie du premier gaz enrichi en CO est séparée par perméation pour former un deuxième gaz enrichi en CO2 par rapport au premier gaz enrichi en CO à une première pression et un gaz plus riche en CO que l'au moins une partie du premier gaz enrichi en CO.

Selon d'autres caractéristiques facultatives :
- l'au moins une partie du premier gaz enrichi en CO est séparée par perméation réalisée à la température ambiante, le gaz enrichi en CO2 par rapport au gaz enrichi en CO étant le perméat.
- l'au moins une partie du premier gaz enrichi en CO est séparée par perméation réalisée à une température entre 10°C au-dessus de la température de sortie de l'unité d'adsorption et 10°C en dessous de la température de sortie de l'unité d'adsorption.
- l'au moins une partie du premier gaz enrichi en CO est séparée par perméation réalisée à une température en dessous de la température de sortie de l'unité d'adsorption, par exemple en dessous de 0°C et supérieure à -52°C, de préférence entre -10°C et -40°C, le gaz enrichi en CO2 par rapport au gaz enrichi en CO étant le perméat.
- l'au moins une partie du premier gaz enrichi en CO est séparée par perméation réalisée à une température supérieure à 50°C et inférieure à 100°C, le gaz enrichi en CO étant réchauffé en amont de la perméation et le gaz enrichi en CO2 par rapport au gaz enrichi en CO étant le perméat.
- le gaz plus riche en CO que l'au moins une partie du premier gaz enrichi en CO est envoyé à un procédé de production de biocarburant, par exemple d'éthanol, par fermentation.
- le gaz envoyé au procédé de production de biocarburant, par exemple d'éthanol, contient moins de 3% mol de CO2.
- le gaz envoyé au procédé de production de biocarburant, par exemple d'éthanol, contient de l'hydrogène et/ou de l'azote et/ou du monoxyde de carbone
- au moins une partie du deuxième gaz enrichi en CO2 est séparée dans l'unité de séparation de l'étape ii).
- l'au moins une partie du deuxième gaz enrichi en CO2 est comprimée dans un compresseur avec le gaz enrichi en CO2.
- l'au moins une partie du premier gaz enrichi en CO est refroidie en amont de la perméation par échange de chaleur par exemple avec un fluide provenant de l'unité de séparation par condensation partielle et/ou distillation et/ou solidification.
- l'au moins une partie du premier gaz enrichi en CO est refroidie en amont de la perméation dans un échangeur de chaleur où se refroidit le gaz appauvri en monoxyde de carbone et enrichi en CO2 par rapport au gaz résiduaire en amont de l'unité de séparation .
- le premier gaz enrichi en monoxyde de carbone et appauvri en CO2 par rapport au gaz résiduaire contient au moins 80%, voire au moins 85%, du monoxyde de carbone présent dans le gaz résiduaire séparé dans l'unité d'adsorption
- au moins un gaz enrichi en hydrogène et/ou en monoxyde de carbone par rapport au gaz appauvri en monoxyde de carbone et enrichi en CO2 est produit par l'unité de séparation par condensation partielle et/ou distillation et/ou solidification et est envoyé à l'unité d'adsorption pour s'y séparer.

Selon un autre objet de l'invention, il est prévu un appareil de séparation du gaz résiduaire relié à une unité de production de métal ferreux comprenant un haut fourneau, un premier compresseur relié pour comprimer un gaz résiduaire du haut fourneau contenant au moins du CO, du CO2, de l'hydrogène et de l'azote, une unité d'adsorption par bascule de pression relié à la sortie du premier compresseur, sans passer par des moyens de séparation par perméation, l'unité d'adsorption étant configurée pour séparer le gaz résiduaire comprimé pour produire un gaz appauvri en monoxyde de carbone et enrichi en CO2 par rapport au gaz résiduaire et un premier gaz enrichi en monoxyde de carbone et appauvri en CO2 par rapport au gaz résiduaire, une unité de séparation par condensation partielle et distillation, une conduite reliée à l'unité d'adsorption et à l'unité de séparation par condensation partielle et distillation pour envoyer le premier gaz enrichi en CO2 de l'unité d'adsorption à une unité de séparation par condensation partielle et distillation, une unité de perméation, une conduite reliée pour sortir de l'unité de séparation un fluide riche en CO2 contenant au moins 80% mol de CO2 et une conduite pour envoyer au moins une partie du gaz enrichi en CO depuis l'unité d'adsorption à l'unité de perméation, l'unité de perméation étant configurée pour former un deuxième gaz enrichi en CO2 par rapport au premier gaz enrichi en CO à une première pression et un gaz plus riche en CO que l'au moins une partie du gaz enrichi en CO.

L'appareil peut comprendre :
- des moyens pour réchauffer ou refroidir l'au moins une partie du gaz enrichi en CO en amont de l'unité de perméation.
- une conduite pour envoyer au moins une partie du deuxième gaz enrichi en CO2 être séparée dans l'unité de séparation.
- un compresseur pour comprimer l'au moins une partie du deuxième gaz enrichi en CO2 et le gaz enrichi en CO2.
- un échangeur de chaleur, des moyens pour envoyer à l'échangeur de chaleur le gaz appauvri en monoxyde de carbone et enrichi en CO2 par rapport au gaz résiduaire et un premier gaz enrichi en monoxyde de carbone et appauvri en CO2 par rapport au gaz résiduaire et des moyens pour envoyer un fluide frigorigène à l'échangeur de chaleur.

L'invention sera décrite de manière plus détaillée en se référant aux figures où :
[FIG.1] représente un procédé comparatif.
[FIG.2] représente un procédé comparatif.
[FIG.3] représente un procédé selon l'invention.

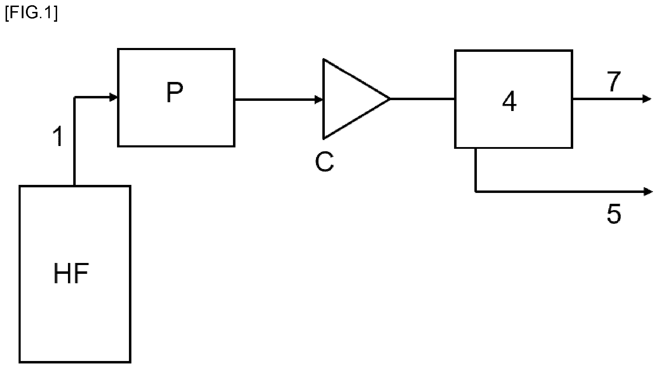

[FIG.1] illustre un procédé de séparation d'un gaz de gueulard 1 contenant au moins du CO, du CO2, de l'hydrogène et de l'azote dont entre 15-45% mol, voire entre 15-30% mol de CO produit par un haut fourneau HF qui est épuré dans une unité de prétraitement P pour enlever les poussières qu'il contient, comprimé par un compresseur C et séparé par adsorption à bascule de pression dans une unité de séparation 4, sans avoir été séparé par perméation en amont de l'unité 4,pour produire un gaz enrichi en CO et en azote et appauvri en CO2 7 par rapport au gaz à séparer 1 et un gaz appauvri en CO et en azote et enrichi en CO2 5 par rapport au gaz à séparer. Dans le cas d'une unité de séparation par adsorption à bascule de pression, connu sous l'acronyme PSA, traitant un gaz résiduaire d'une unité de métal ferreux comprimé à environ 8 bars et opéré en mode "rendement CO élevé", le rendement de récupération du CO à haute pression dans le gaz 7 est typiquement supérieur à 80%

(voire supérieur à 85%) pour des rendements correspondants d'extraction de CO₂ à basse pression dans le gaz 5 aux alentours de 88% et d'N₂ de 15%. On cherche à la fois à maximiser le rendement de récupération du CO et les rendements d'extraction du CO2/N2.

Le flux riche en CO 7 généré par le PSA 4 contient donc également beaucoup d'azote (environ 85% mol du débit de gaz traité) car la sélectivité CO/N₂ est très faible sur des adsorbants classiques. Il contient également de l'hydrogène et du CO₂ (environ 12% du débit de gaz traité).

Le gaz riche en CO₂ produit à basse pression par le PSA contient également le CO non adsorbé (environ 15% du débit de gaz de gueulard traité), de l'H₂, de l'azote et l'eau présente dans le gaz de gueulard.

**[TAB1] représente un exemple de bilan de matière obtenu pour un PSA 4 seul fonctionnant en mode "rendement CO élevé" sur gaz résiduaire 1 à environ 8 bars comme illustré à la [FIG. 1] :**

| | Entrée PSA 4 | Gaz enrichi en CO 7 | Gaz enrichi en CO2 5 |
|---|---|---|---|
| Débit | 100 | 67 | 33 |
| H2 mole % | 5 | 8 | 1 |
| CO | 25 | 32 | 11 |
| CO2 | 26 | 5 | 68 |
| N2 | 43 | 55 | 18 |
| H2O | 1 | 0 | 2 |

| | | | |
|---|---|---|---|
| Rendement récupération CO = 85.8 % | | | |

Il est connu de séparer le gaz enrichi en CO2 produit à basse pression par séparation par adsorption d'un gaz de gueulard d'une unité de métal ferreux, par exemple par condensation partielle et/ou distillation. Ces deux technologies peuvent être intégrées en recyclant tout ou partie du flux de gaz appauvri en CO2 et contenant du CO provenant de la séparation par condensation partielle et/ou distillation dans une unité de séparation CC en amont ou en aval du compresseur du gaz C alimentant le PSA 4, permettant l'économie de 10% ou plus de l'énergie de compression du PSA 4 (pour la production d'un débit partiel constant de CO en sortie du PSA 4). Cette intégration permet en outre d'augmenter la pureté en CO du produit HP du PSA 4.

**[TAB.2] montre l'exemple d'un bilan de matière obtenu pour un PSA 4 fonctionnant en mode "Rendement CO élevé" sur le gaz résiduaire 1 d'un haut fourneau HF à environ 8 bars combiné à une unité de séparation par condensation partielle et/ou distillation et/ou solidification CC :**

| | Entrée PSA | Gaz enrichi en CO (produit) | Gaz enrichi en CO2 |
|---|---|---|---|
| Débit | 100 | 80 | 20 |
| H2 mole % | 5 | 7 | 0 |
| CO | 25 | 31 | 0.5 |
| CO2 | 26 | 7 | 99 |
| N2 | 43 | 55 | 0.5 |
| H2O | 1 | 0 | 0 |

Le rendement de récupération de CO est dans ce cas proche de 100%, grâce à l'envoi d'au moins un gaz enrichi en hydrogène et/ou en monoxyde de carbone par rapport au gaz appauvri en monoxyde de carbone et enrichi en CO2 depuis l'unité CC vers le PSA 4.

Il est possible d'opérer le PSA sur "gaz de gueulard" 1 en mode "Haute rendement de CO2" avec un rendement dégradé de récupération de CO, ce qui permet d'augmenter le rendement d'extraction du CO2. Ce fonctionnement peut être obtenu en modifiant le cycle du PSA et/ou en jouant sur la qualité des adsorbants et/ou en laissant moins percer le CO2 dans le gaz riche en CO.

Exemple de rendements qui peuvent être obtenus par un PSA sur gaz de gueulard à 8 bars :

**[TAB.3]**

| PSA | | | |
|---|---|---|---|
| MODE | | Rendement élevé de CO | Production élevée de CO2 |
| Rendement CO | % | 85 | 80 |
| Rendement N2 | % | 86 | 82 |
| Rendement CO2 | % | 13 | 2 |
| Rendement H2 | % | 94 | 93 |

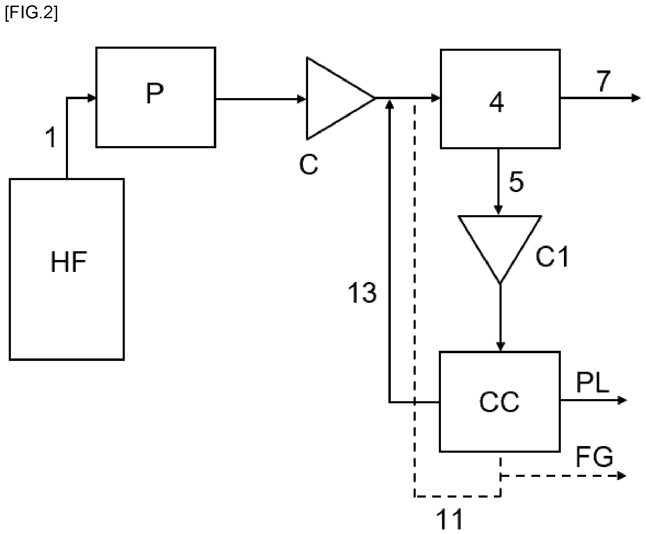

En opération sur mode "Production élevée de CO2", il peut en résulter un débit riche en CO contenant moins de 2 mole % de CO2. En revanche, on constatera une diminution du débit partiel de CO produit et donc du rendement de récupération du CO. Le couplage d'un PSA CO2 comme illustré dans la [FIG.2] avec une séparation par condensation partielle et/ou distillation CC, a pour objectifs à la fois:
- D'enrichir le gaz résiduaire du PSA en CO2 afin de minimiser l'énergie spécifique du procédé de séparation de CO2 par condensation partielle et/ou distillation et/ou solidification.
- D'augmenter la pureté en CO d'un produit du PSA qui peut être envoyé à un procédé consommateur de monoxyde de carbone, par exemple un procédé de conversion de CO en éthanol par fermentation, utilisateur du CO.

Le gaz 5 enrichi en CO2 est envoyé à une unité de condensation partielle et/ou de distillation et/ou de solidification CC comme décrit dans la demande de brevet FR. L'unité CC produit un fluide riche en CO2 PL contenant au moins 80% mol de CO2 et un gaz 13 enrichi en au moins une impureté plus légère que le CO2, par exemple le monoxyde de carbone et l'hydrogène. Le gaz 13 est recyclé en amont de l'unité d'adsorption PSA.

Le gaz 5 peut être comprimé dans un compresseur C1 en amont de l'unité CC.

Le gaz 5 peut être séché en amont de l'unité CC dans des sécheurs, par exemple par adsorption à bascule de température. Le gaz utilisé pour régénérer les sécheurs peut servir ensuite comme gaz combustible FG et/ou être recyclé en amont du PSA comme gaz 11.

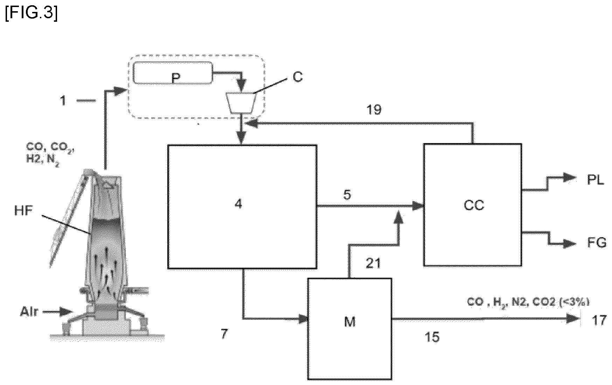

Selon une variante de la [FIG.2], la [FIG.3] illustre un procédé dans lequel le gaz appauvri en CO2 et enrichi en CO 7 provenant de l'unité d'adsorption 4 est séparé par perméation dans l'unité de perméation M.

La maximisation du rendement en CO du PSA 4 peut être recherchée tout en essayant d'obtenir un gaz résiduaire 5 de PSA 4 plus riche en CO2, diminuant ainsi l'énergie spécifique de la séparation par condensation partielle et/ou distillation et/ou solidification CC. L'intérêt principal de faire fonctionner le PSA 4 en mode « rendement CO élevé" est d'augmenter la concentration en CO2 dans le gaz résiduaire 5 du PSA 4, celui-ci étant le débit alimentant l'appareil de séparation par condensation partielle et/ou distillation et/ou solidification CC. Cette optimisation présente l'intérêt de diminuer l'OPEX, et dans une moindre mesure le CAPEX de l'appareil de séparation par condensation partielle et/ou distillation et/ou solidification CC.

Un tel réglage du PSA 4 peut être obtenu en modifiant le cycle du PSA et/ou en jouant sur la qualité des adsorbants et/ou en laissant davantage percer le CO2 dans le gaz riche en CO 7. Le CO2 contenu dans ce gaz 7 disponible à 8-9 bar peut être en grande partie enlevé, grâce à l'ajout d'une étape de séparation par perméation dans une unité de perméation M comme indiqué dans la Fig. 3. Les membranes utilisées peuvent être de type membranes PI opérée à température inférieures à 0°C ou des membranes en fibres PoroGen ^{®}, permettant par exemple d'enlever plus que 70% du CO2 tout en ne perdant que 5% du CO. Le perméat 21 de ces membranes M sera un flux très riche en CO2 et à basse pression, pouvant être recyclé à l'amont de la séparation par condensation partielle et/ou distillation et/ou solidification CC pour récupération. L'unité membranaire M installée en aval du PSA 4 va séparer le débit 7 enrichi en CO afin de générer deux flux:
1- un premier flux haute pression 15 (résidu) riche en CO et N2 et contenant une faible proportion de CO2. La diminution du CO2 dans ce flux offre ainsi la possibilité d'alimenter un client 17 à la recherche d'un produit riche en CO, par exemple pour augmenter la productivité d'un procédé de fermentation 17 qui consomme le CO dans le gaz pour produire de l'éthanol ou autre carburant.
2-un second flux à basse pression 21 (perméat), très riche en CO2, et envoyé en entrée de séparation par condensation partielle et/ou distillation et/ou solidification CC, permettant une récupération du CO et de l'H2 contenu dans ce perméat.

### Quatre types d'applications de séparation par de membrane peuvent être envisagés :

### 1) Séparation à température ambiante

Au moins une partie du gaz enrichi en CO 7 produit par le PSA 4 est séparée par perméation réalisée à la température ambiante dans l'unité membranaire M, le gaz enrichi en CO2 21 par rapport au gaz enrichi en CO 7 étant le perméat. Cela est possible en utilisant des membranes plus sélectives en CO2 qu'en CO.

### Des exemples d'une membrane adaptée sont P-Guard ou D-Guard ou R-Guard de la société PoroGen Corporation ou PI-1 ou PI-2 de la société Medal

### 2) Séparation à une température en dessous de la température d'opération de l'unité d'adsorption 4 (mode préférable)

Au moins une partie du gaz enrichi en CO 7 est séparée par perméation M réalisée à une température en dessous de la température d'opération de l'unité d'adsorption 4, par exemple en dessous de 0°C et supérieure à -52°C, de préférence entre -15°C et -35°C le gaz enrichi en CO2 21 par rapport au gaz enrichi en CO 7 étant le perméat. Un exemple d'une membrane adaptée est PI-1 ou PI-2 de la société Medal. Au moins une partie du gaz 7 enrichi en CO est refroidie en amont de la perméation M par un fluide froid provenant de l'unité de séparation par condensation partielle et/ou distillation et/ou solidification CC.

### 3) Séparation à une température supérieure à 50°C et inférieure à 100°C

Au moins une partie du gaz enrichi en CO 7 est séparée par perméation M réalisée à une température supérieure à 50°C et inférieure à 100°C, le gaz enrichi en CO 7 étant réchauffé en amont de la perméation et le gaz enrichi en CO2 21 par rapport au gaz enrichi en CO étant le perméat.

Un exemple d'une membrane adaptée est G5 ou PIX chez Medal.

### 4) Séparation à une température entre 10°C au-dessus de la température de sortie de l'unité d'adsorption et 10°C en dessous de la température de sortie de l'unité d'adsorption.

Un exemple d'une membrane adaptée est P11-P12 chez Medal.

Un produit 15 de la séparation par perméation M, selon un des quatre types, est appauvri en CO2 par rapport au gaz enrichi en CO et est envoyé à un procédé de production d'éthanol par fermentation 17. Le gaz 15 contient de préférence moins de 3% mol de CO2.

Dans cet exemple, aucune partie du gaz enrichi en CO 7 n'est renvoyée au haut fourneau HF.

Au moins une partie du deuxième gaz enrichi en CO2 21 produit par la perméation M est séparée dans l'unité de séparation CC afin de récupérer le CO2 qu'elle contient. Elle peut éventuellement être comprimée dans un compresseur avec le premier gaz. Le haut fourneau HF de la [FIG.3] peut être alimenté par de l'air ou de l'oxygène.

Au moins un gaz enrichi en hydrogène et/ou en monoxyde de carbone par rapport au gaz appauvri en monoxyde de carbone et enrichi en CO2 est produit par l'unité de séparation par condensation partielle et/ou distillation et/ou solidification, par exemple le gaz FG. Ce gaz ou ces gaz peuvent être envoyés à l'unité d'adsorption 4 pour s'y séparer ;

Le gaz résiduaire 5 et le gaz enrichi en CO 7 peuvent être en amont de l'unité de séparation CC et la séparation par perméation M respectivement dans un échangeur de chaleur commun. Des moyens pour envoyer un fluide frigorigène à l'échangeur de chaleur seront prévus.

## Revendications

1. Procédé de séparation du gaz résiduaire d'une unité de production de métal ferreux qui est un haut fourneau dans lequel :
i) Le gaz résiduaire (1) contient au moins du CO, du CO2, de l'hydrogène et de l'azote, dont entre 15-45% mol, voire entre 15-30% mol de CO, à base sèche et est comprimé dans un premier compresseur (C) et ensuite séparé par adsorption à bascule de pression (4) dans une unité d'adsorption pour produire un gaz (5) appauvri en monoxyde de carbone et enrichi en CO2 par rapport au gaz résiduaire et un premier gaz (7) enrichi en monoxyde de carbone et appauvri en CO2 par rapport au gaz résiduaire
ii) Le gaz enrichi en CO2 est envoyé à une unité (CC) de séparation par condensation partielle et/ou distillation et/ou solidification qui produit un fluide riche en CO2 (PL) contenant au moins 80% mol de CO2
iii) Au moins une partie du premier gaz (7) enrichi en CO est séparée par perméation (M) pour former un deuxième gaz (21) enrichi en CO2 par rapport au premier gaz enrichi en CO à une première pression et un gaz (15) plus riche en CO que l'au moins une partie du premier gaz enrichi en CO.

2. Procédé selon la revendication 1 dans lequel l'au moins une partie du premier gaz (7) enrichi en CO est séparée par perméation (M) réalisée à la température ambiante, le gaz enrichi en CO2 par rapport au gaz enrichi en CO étant le perméat.

3. Procédé selon la revendication 1 ou 2 dans lequel l'au moins une partie du premier gaz (7) enrichi en CO est séparée par perméation (M) réalisée à une température entre 10°C au-dessus de la température de sortie de l'unité d'adsorption (4) et 10°C en dessous de la température de sortie de l'unité d'adsorption.

4. Procédé selon la revendication 1 dans lequel l'au moins une partie du premier gaz (7) enrichi en CO est séparée par perméation réalisée à une température en dessous de la température de sortie de l'unité d'adsorption (4), par exemple en dessous de 0°C et supérieure à -52°C, de préférence entre -10°C et -40°C, le gaz (21) enrichi en CO2 par rapport au gaz enrichi en CO étant le perméat.

5. Procédé selon la revendication 1 dans lequel l'au moins une partie du premier gaz (7) enrichi en CO est séparée par perméation (M) réalisée à une température supérieure à 50°C et inférieure à 100°C, le premier gaz enrichi en CO étant réchauffé en amont de la perméation et le gaz enrichi en CO2 (21) par rapport au premier gaz enrichi en CO étant le perméat.

6. Procédé selon une des revendications précédentes dans lequel le gaz (15) plus riche en CO que l'au moins une partie du premier gaz enrichi en CO est envoyée à un procédé de production de biocarburant (17), par exemple d'éthanol, par fermentation.

7. Procédé selon la revendication 6 dans lequel le gaz (15) envoyé au procédé de production de biocarburant (17), par exemple d'éthanol, contient moins de 3% mol de CO2.

8. Procédé selon l'une des revendications précédentes dans lequel au moins une partie du deuxième gaz (21) enrichi en CO2 est séparée dans l'unité de séparation (CC) de l'étape ii).

9. Procédé selon la revendication 8 dans lequel l'au moins une partie du deuxième gaz enrichi en CO2 (21) est comprimée dans un compresseur avec le gaz enrichi en CO2 (5).

10. Procédé selon la revendication 3 dans lequel l'au moins une partie du premier gaz enrichi en CO (7) est refroidie en amont de la perméation (M) par exemple par échange de chaleur avec un fluide provenant de l'unité de séparation (CC) par condensation partielle et/ou distillation et/ou solidification.

11. Procédé selon la revendication 10 dans lequel l'au moins une partie du premier gaz enrichi en CO (7) est refroidie en amont de la perméation (M) dans un échangeur de chaleur où se refroidit le gaz (5) appauvri en monoxyde de carbone et enrichi en CO2 par rapport au gaz résiduaire en amont de l'unité de séparation (CC).

12. Procédé selon l'une des revendications précédentes dans lequel au moins un gaz enrichi en hydrogène et/ou en monoxyde de carbone (11, 13, FG) par rapport au gaz appauvri en monoxyde de carbone et enrichi en CO2 (5) est produit par l'unité de séparation par condensation partielle et/ou distillation et/ou solidification (CC) et est envoyé à l'unité d'adsorption (4) pour s'y séparer.

13. Appareil de séparation du gaz résiduaire relié à une unité de production de métal ferreux (HF) comprenant un haut fourneau (HF), un premier compresseur (C) relié pour comprimer un gaz résiduaire (1) du haut fourneau contenant au moins du CO, du CO2, de l'hydrogène et de l'azote, une unité d'adsorption par bascule de pression (4) relié à la sortie du premier compresseur, sans passer par des moyens de séparation par perméation, l'unité d'adsorption étant configurée pour séparer le gaz résiduaire comprimé pour produire un gaz (5) appauvri en monoxyde de carbone et enrichi en CO2 par rapport au gaz résiduaire et un premier gaz (7) enrichi en monoxyde de carbone et appauvri en CO2 par rapport au gaz résiduaire, une unité de séparation (CC) par condensation partielle et distillation, une conduite reliée à l'unité d'adsorption et à l'unité de séparation par condensation partielle et distillation pour envoyer le premier gaz enrichi en CO2 de l'unité d'adsorption à une unité de séparation par condensation partielle et distillation, une unité de perméation (M), une conduite reliée pour sortir de l'unité de séparation un fluide riche en CO2 (PL) contenant au moins 80% mol de CO2 et une conduite pour envoyer au moins une partie du gaz enrichi en CO depuis l'unité d'adsorption à l'unité de perméation, l'unité de perméation étant configurée pour former un deuxième gaz enrichi en CO2 (21) par rapport au premier gaz enrichi en CO à une première pression et un gaz (15) plus riche en CO que l'au moins une partie du gaz enrichi en CO.

14. Appareil selon la revendication 13 comprenant un échangeur de chaleur, des moyens pour envoyer à l'échangeur de chaleur le gaz (5) appauvri en monoxyde de carbone et enrichi en CO2 par rapport au gaz résiduaire et un premier gaz (7) enrichi en monoxyde de carbone et appauvri en CO2 par rapport au gaz résiduaire et des moyens pour envoyer un fluide frigorigène à l'échangeur de chaleur.
